# EUROPEAN PATENT SPECIFICATION

(11) **EP 2 497 873 B1**
(45) Date of publication and mention of the grant of the patent: **21.02.2018**
(21) Application number: 12158144.1
(22) Date of filing: 05.03.2012
(51) Int. Cl.: E04F 13/18, F16B 2/24, F16B 15/00

(54) **Assembly and clamping part**
Anordnung und Klammerteil
Ensemble et pièce de fixation

(30) Priority: 09.03.2011 NL 2006362
(43) Date of publication of application: 12.09.2012
(73) Proprietor: Heering Kunststof Profielen B.V., 7701 SG Dedemsvaart (NL)
(72) Inventor: Janssen, Bob, 7701 SG Dedemsvaart (NL)
(74) Representative: van Essen, Peter Augustinus

(56) References cited:
- EP-A1- 0 783 064
- BE-A3- 1 016 752
- DE-U1-202004 009 095
- FR-A1- 2 655 094
- GB-A- 2 263 933
- US-A- 3 900 998
- US-A- 5 048 448
- US-A1- 2007 206 989

## Description

### BACKGROUND OF THE INVENTION

The invention relates to a clamping part, and an assembly with said clamping part. A façade cladding element assembly is generally known in the art and is mainly used for façade cladding used on exteriors. By using high quality synthetic materials façade cladding that hardly needs any maintenance can be obtained on which a warranty of many years can be obtained. An example of such a façade cladding element is described in NL2004495.
In the prior art many clamping parts are known to clamp two parts securely, such that in an environment of changing temperatures the parts remain securely clamped onto each other. Known connection techniques are a mortise-and-tenon joint, and for instance the use of dowels. However, the way to attach end parts securely onto the façade elements can still be improved.

Document US5048448 discloses a clamping part for clamping an end part provided with at least one projecting part onto an end of a synthetic element that is provided with hollow chambers.

EP783064 discloses extrusion elements, designed to be assembled with others of the same type and, when necessary, be dismantled. They have inner partitions forming a number of cells which extend along its full length, and are made from a composite material based on a mixture of polyolefin(s) and sawdust. Its opposite edges are tongued and grooved for connection to other similar elements, each tongue having a dovetail cross-section and each groove a matching shape. The ends of the extruded elements can be closed by covers which can be joined to them by a force fit.
BE1016752 shows a coupling part for synthetic lath parts. In this case as well there is a lack of clamping.

There is room for an improved mutual attachment of parts, particularly of synthetic parts.

### SUMMARY OF THE INVENTION

It is an object of the invention to provide an assembly with improved clamping connection.
It is a further or additional object of the invention to provide a clamping connection that is easy to realise.
It is a further or additional object of the invention to provide a clamping connection that will keep a good clamping action under changing conditions.

For that purpose the invention provides a clamping part as defined by claim 1. By using a clamping part between a synthetic element and an end part it is prevented that under changing climate conditions the end part starts to jar with respect to the synthetic element, or even gets detached therefrom. Moreover an end part that is easy to arrange is possible. It will be clear that en end part can also be suitable to serve for instance other purposes, such as connecting or coupling synthetic elements in each other's extension, as a finish. Often an end part will be a part that is attached to the end for closing off and as a finish. Especially when a synthetic element is exposed to changing climate conditions the clamping part has advantage, such as with façade cladding elements.

The lips in general do not extend perpendicularly from the edge of the opening, but extend within the notional continuation of the opening in the clamping part. As a result the distance between the outer ends of the lips is generally smaller than the cross-section of the opening.

In one embodiment the outer ends of the lips of the clamping part are bent, in one embodiment further provided with teeth, for forming hook members.
In one embodiment the clamping part is formed out of a band of spring steel, preferably stainless spring steel. An advantage of spring steel is that a proper clamping is achieved and the stainless steel provides proper climate resistance.
In one embodiment the hole is substantially rectangular, the opening is substantially rectangular, and the projecting part is substantially rectangular. A rectangular hole provided with lips opposite each other is easy to realise. Alternatively the lips may extend on several sides. The opening of the clamping part may for instance also be triangular with a lip on each side. The hole or the continuous channel of the façade cladding element has a similarly shaped cross-section. The projecting part of the end part as well as regards cross-section has a similar shape to both previous parts. Moreover their mutual dimension is adapted such that the projecting part fits through the opening and in the hollow chamber. Moreover the projecting part pushes the lips apart so that the hook members extend in the wall of the hollow chamber or the hole. In addition, due to the resilience of the lips, opposite hook members are pushed into the projecting part. Said hook members counteract withdrawal from the opening.

In one embodiment the synthetic element is an extrusion profile having a series of hollow chambers that are continuous in the longitudinal direction and situated below one another.
In one embodiment the synthetic element is a façade cladding element for instance a synthetic lath part, provided with hollow chambers that are continuous in the longitudinal direction.
In one embodiment the end part is an injection moulded part, sealingly fitting onto the end of the synthetic lath, particularly a perimeter of the end part is the same as the cross-section of the synthetic lath.
In case of several openings in the synthetic element a clamping part may have several openings each with projecting lips. Said openings are then in register with the openings or hollow chambers in the element. It will be clear that the number need not correspond, but it is possible. For the projecting parts of the end part the same applies as for the openings of the clamping part.

### SHORT DESCRIPTION OF THE DRAWINGS

In the attached figures an embodiment of an assembly of parts to be clamped to each other and a clamping part is shown in which:
figure 1 shows a view in perspective of an embodiment of a clamping part;
figure 2 shows a side view of the clamping part of figure 1;
figure 3 shows a top view of the clamping part of figure 1 as semi-finished product;
figure 4 shows a use of the clamping part of figure 1 for clamping end parts to a synthetic lath part.

### DETAILED DESCRIPTION OF THE DRAWINGS

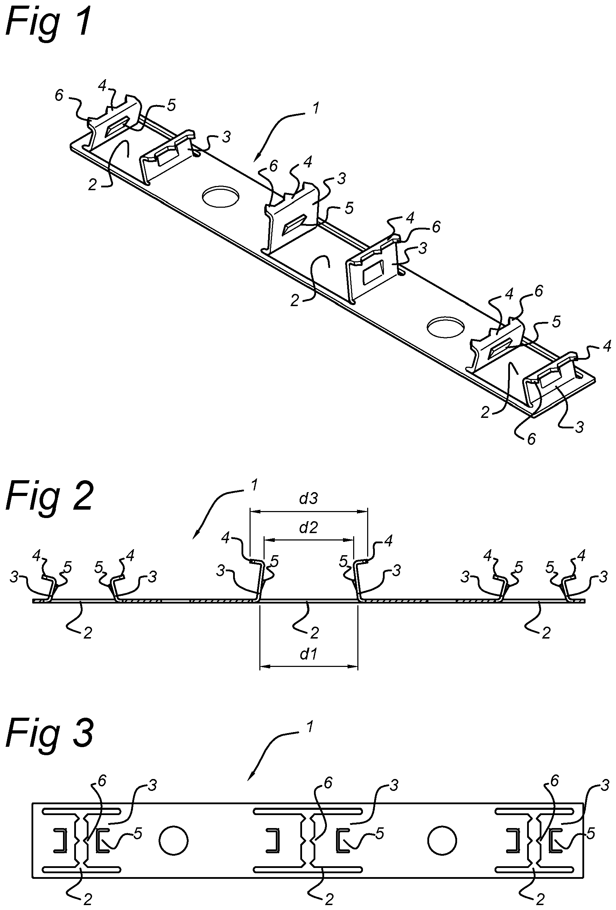

Figure 1 shows a view in perspective of a clamping part 1 made out of a strip of resilient material. The strip is provided with in this case three openings 2. In this embodiment the openings 2 are rectangular. From opposite sides of the rectangular openings 2 lips 3 extend from the strip. The outwardly oriented hook members are formed as follows in this embodiment. The lips 3 are each provided with a bent outer end 4, bent outwards away from the opening. The outer ends 4 here are approximately transverse to the lips 3. The bent outer ends 4 are further provided with teeth 6. The sharp teeth 6 can be pushed into the synthetic material using pressure.
The lips 3 are furthermore provided with inwardly oriented hook members 5. Said hook members 5 are in this case formed out of parts of the lips 3 that are extended from the plane. By punching sub lips 5 on the lips 3, which sub lips extend in the same direction as the lips 3, and have them protrude inwards, barbs are obtained that offer resistance to removing a projecting part out of the opening 2.

Figure 2 shows a side view of the clamping part of figure 1. In the side view it can be seen very well that a pair of lips 3 are bent towards each other on either side of an opening 2. The angle between the lips 3 and the plane of the strip exceeds 90 degrees. In the embodiment the angle is approximately 95-110 degrees. On the other hand the angle is so large that the distance between the outwardly oriented hook members 4 is smaller than the width of opening 2. Furthermore the smallest distance between the lips 3 is smaller than the width of opening 2. In one embodiment said smallest distance is 1-3 mm smaller than the width of opening 2. In this embodiment the width of the openings 2 is approximately 10-30 mm. The lips 3 will then be approximately 4-15 mm long, respectively. The turned outer ends in this embodiment are approximately 1-4 mm.

The distance between outer ends of the teeth 6 as described is smaller than the width of opening 2. As a result the lips 3 can be introduced into a rectangular hole having at least the size of opening 2.

In figure 3 a punched clamping part 1 is shown of which the various parts have not been turned yet like in figure 1. A next step in the manufacturing process of a clamping part 1 could be turning an outer end of a lip 3 and in opposite direction pushing out the lip 5 punched out of the lip 3.

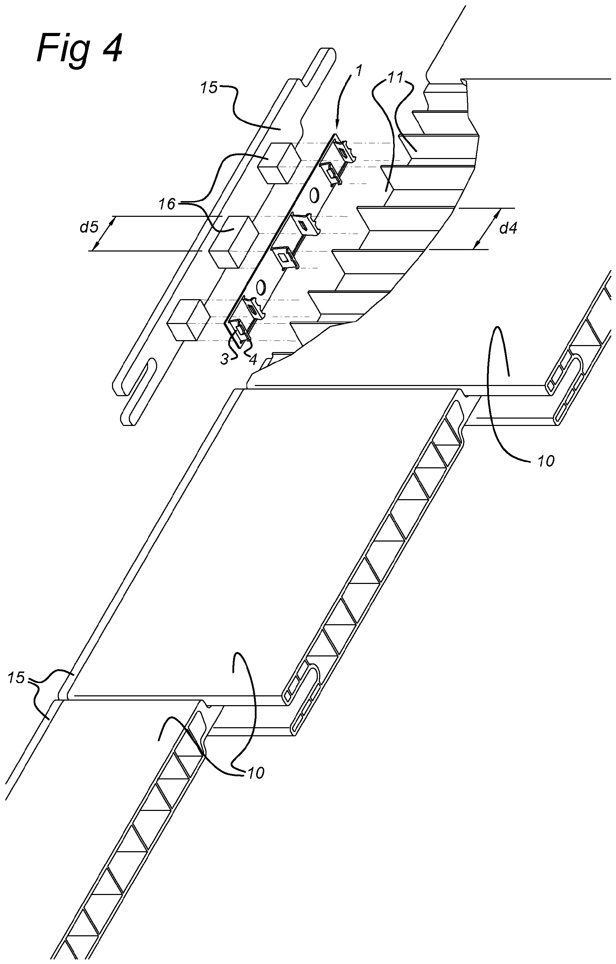

In figure 4 several façade cladding elements 10 are shown that are provided with end parts 15. An exploded view is shown of an end part 15 and a clamping part 1. End part 15 is provided with projecting parts 16 which are shown as solid in the depiction. In reality this will be open parts having walls as shown in the lowermost projecting part. The shape of the projecting parts 18, particularly their cross-section, is adapted to the cross-section of the hollow continuous chambers 11. In addition the dimensions will be smaller than the inner dimensions of the continuous hollow chambers. In practice a projecting part 16 will have a dimension that is some tenths of millimetres minus the thickness of the lips smaller than the inner dimensions of the corresponding continuous hollow chamber. The width of the lips 3 is not critical, as long as they are larger than the corresponding inner dimension of the related hollow continuous chamber 11.

Due to the end parts 15 that moreover remain properly clamped, the façade cladding elements look solid and look like wooden façade cladding elements, for instance tongue-and-groove planking or laths.

The working is as follows and is illustrated in figure 4. The clamping part 1 is arranged on a head end of synthetic façade cladding element 10. The openings 2 are then in register with the continuous hollow chamber 11. The clamping part 1 with the lips 2 is introduced into the continuous hollow chambers. As the distances d3 of the hook members are smaller than the wall distances d4, clamping part 1 can easily be arranged. In the second step end part 15 is arranged. The projecting parts 16 of the end part 15 are in register with the openings 2 in the clamping part. When pressing (or tapping in) end part 15 the projecting parts 16 are introduced into the continuous hollow chambers 11 through the openings 2 of the clamping part 1. This is possible because the width of the projecting parts is smaller than the width d1 of the openings 2. When entering the continuous hollow chambers 11 the lips 3 are pushed apart as the width d5 of the projecting parts is larger than the smallest distance d2 between opposite lips 3 that extend into one continuous hollow chamber 11. Due to the lips 3 being pushed apart the teeth 6 are pushed into the walls of the continuous hollow chambers 11. Furthermore the lips 3 are made of resilient material and keep exerting a pressure onto the walls 18 of the projecting parts 16. The hook members 5 formed out of an inwardly protruding wall section of lip 3 are pushed into the walls 18 of the projecting parts also due to the inwardly oriented resilience of the lips 3. As a result the hook members form barbs that retain the projecting parts 16 in the continuous hollow chambers 11. Due to the fixed manner of clamping also in case of large temperature changes that may occur in the façade cladding elements, the end parts will not start to jar or get detached.
The clamping part as described may be used to clamp synthetic parts onto each other, wherein a first synthetic part is provided with at least one opening for fittingly accommodating the lips of the clamping part, and a second synthetic part provided with at least one projecting part that extends through the opening of the clamping part and extends in the opening of the first synthetic part.
It will be clear that the above description is included to illustrate the working of preferred embodiments of the invention and not to limit the scope of the invention, as defined by the appended claims.

## Claims

1. A clamping part (1) for clamping an end part (15) provided with at least one projecting part (16) onto an end of a synthetic element (10), particularly a façade element, that is provided with at least one hollow chamber (11) that is continuous in the longitudinal direction; said clamping part (1) being of a substantially strip-shaped resilient material, comprising at least one opening (2) with on the edge lips (3) that are situated opposite each other and extend from the strip and in a neutral position extend towards the opening (2), and which lips (3) are provided with first hook members (4, 6) that extend outward from the lips (3), and with second hook members (5) that extend inward in the opening (2), wherein said clamping part (1) is dimensioned in such a way that with the lips (3) extending in the hole on the end of the synthetic element, and the end part (15) subsequently arranged on the clamping part (1) with the projecting part (16) extending in the hole and through the opening (2), the projecting part (16) pushes the lips (3) apart with the outward hook members (4, 6) clamping in the walls of the continuous hollow chamber (11) and with the inward hook members (5) clamping in the projecting part.

2. The clamping part (1) according to claim 1, wherein outer ends of the lips of the clamping part are bent, in one embodiment further provided with teeth, for forming hook members.

3. The clamping part (1) according to claim 1 or 2, wherein the clamping part is formed out of a band of spring steel, preferably stainless spring steel.

4. The clamping part (1) according to any one of the preceding claims, wherein the hole is substantially rectangular, the opening (2) is substantially rectangular, and the projecting part (16) is substantially rectangular.

5. The clamping part (1) of claim 1, wherein said first hook members (4), are turned outer ends of the lips (3), bent outwards away from the opening (2).

6. The clamping part (1) of claim 1 or 5, wherein said inwardly oriented hook members (5), are formed by punching sub lips (5) on the lips (3) which sub lips (5) extend in the same direction as the lips (3) and protrude inwards, providing barbs that offer resistance to removing a projecting part out of the opening (2).

7. Assembly, particularly a façade cladding element assembly, comprising the clamping part according to any one of the preceding claims and:
- a synthetic element (10), particularly a façade element, with an end and at least one hollow chamber (11) that is continuous in the longitudinal direction, and
- an end part (15) provided with at least one projecting part (16) for attachment to the end of the synthetic element (10) to provide its finish, wherein in use
the clamping part (1) with the lips (3) extending in the hole is arranged on the end of the synthetic element, and the end part (15) is subsequently arranged on the clamping part (1) wherein the projecting part (16) extends in the hole and through the opening (2), having mutual dimensions adapted such that the projecting part (16) pushes the lips (3) apart with the outward hook members (5) clamping in the walls of the continuous hollow chamber (11) and with the inward hook members (4, 6) clamping in the projecting part.

8. The assembly (1) according to any one of the preceding claims, wherein the synthetic element (10) is an extrusion profile having a series of hollow chambers (11) that are continuous in the longitudinal direction and situated below one another.

9. The assembly (1) according to any one of the preceding claims, wherein the synthetic element is a façade cladding element (10), particularly a synthetic lath part, provided with hollow chambers that are continuous in the longitudinal direction.

10. Assembly according to the preceding claim, wherein the end part is an injection moulded part, sealingly fitting onto the end of the synthetic element, particularly a perimeter of the end part is the same as the cross-section of the synthetic element.

## Patentansprüche

1. Ein Klemmteil (1) zum Aufklemmen eines Endteils (15), das zumindest ein hervorstehendes Teil (16) aufweist, auf ein Ende eines Kunststoff-Elements (10), insbesondere eines Fassadenelements, das zumindest eine Hohlkammer (11) aufweist, die in der Längsrichtung kontinuierlich ist; wobei das Klemmteil (1) aus einem im wesentlichen profilförmigen elastischen Material ist und zumindest eine Öffnung (2) mit auf der Kante angeordneten Lippen (3) aufweist, die einander gegenüber angeordnet sind und sich vom Profil aus erstrecken und die sich in einer neutralen Position in Richtung der Öffnung (2) erstrecken, welche Lippen (3) erste Hakenelemente (4, 6) aufweisen, die sich von den Lippen (3) nach außen erstrecken, und zweite Hakenelemente (5), die sich nach innen in die Öffnung (2) erstrecken, wobei das Klemmteil (1) so bemessen ist, dass, wenn die Lippen (3) sich in das Loch am Ende des Kunststoff-Elements erstrecken und das Endteil (15) anschließend auf den Klemmteil (1) angeordnet wird, wobei sich das hervorstehende Teil (16) in das Loch und durch die Öffnung (2) hindurch erstreckt, das hervorstehende Teil (16) die Lippen (3) auseinanderdrückt, wobei sich die äußeren Hakenelemente (4, 6) in die Wände der kontinuierlichen Hohlkammer (11) klemmen und die inneren Hakenelemente (5) sich in das hervorstehende Teil klemmen.

2. Klemmteil (1) gemäß Anspruch 1, wobei die äußeren Enden der Lippen des Klemmteils gebogen sind, und in einer Ausführungsform weiterhin mit Zähnen ausgestattet sind, zur Bildung von Hakenelementen.

3. Klemmteil (1) gemäß Anspruch 1 oder 2, wobei das Klemmteil aus einem Band von Federstahl, vorzugsweise rostfreier Federstahl, gebildet wird.

4. Klemmteil (1) gemäß einem der vorigen Ansprüche, wobei das Loch im Wesentlichen rechteckig ist, die Öffnung (2) im Wesentlichen rechteckig ist und das hervorstehende Teil (16) im Wesentlichen rechteckig ist.

5. Klemmteil (1) gemäß Anspruch 1, wobei die genannten ersten Hakenelemente (4, 6) gedrehte äußere Enden der Lippen (3) sind, nach außen von der Öffnung (2) hinweggebogen.

6. Das Klemmteil (1) gemäß Anspruch 1 oder 5, wobei die nach innen ausgerichteten Hakenelemente (5) gebildet werden durch das Stanzen von Unter-Lippen (5) auf den Lippen (3), wobei diese Unter-Lippen (5) sich in dieselbe Richtung wie die Lippen (3) erstrecken und nach innen hervorstehen, sodass sie Widerhaken bilden, die dem Entfernen eines hervorstehenden Teils aus der Öffnung (2) Widerstand entgegensetzen.

7. Zusammenstellung, insbesondere eine Fassaden-Verkleidungselementzusammenstellung, die das Klemmteil gemäß einem der vorigen Ansprüche aufweist; und
- ein Kunststoff-Element (10), insbesondere ein Fassaden-Element, das ein Ende und mindestens eine Hohlkammer (11) aufweist, die in Längsrichtung kontinuierlich ist, und
- ein Endteil (15), das zumindest ein hervorstehendes Teil (16) zur Befestigung am Ende des Kunststoff-Elements (10) aufweist, um im benutzten Zustand dessen Fertigstellung zu bewirken;
das Klemmteil (1) mit den Lippen, die sich in das Loch erstrecken, ist am Ende des Kunststoff-Elements angeordnet, und das Endteil (15) wird anschließend auf den Klemmteil (1) angeordnet, wobei sich das hervorstehende Teil (16) in das Loch und durch die Öffnung (2) erstreckt, wobei die wechselseitigen Abmessungen so angepasst sind, dass das hervorstehende Teil (16) die Lippen (3) auseinanderdrückt, wobei die äußeren Hakenelemente (4, 5) sich in die Wände der kontinuierlichen Hohlkammer (11) klemmen und sich die inneren Hakenelemente (6) in das hervorstehende Teil klemmen.

8. Zusammenstellung (1) entsprechend einem der vorigen Ansprüche, wobei das Kunststoff-Element (10) ein Extrusionsprofil ist, das eine Reihe von Hohlkammern (11) aufweist, die in der Längsrichtung kontinuierlich sind und untereinander angeordnet sind.

9. Zusammenstellung (1) gemäß einem der vorigen Ansprüche, wobei das Kunststoffelement ein Fassaden-Verkleidungselement (10) ist, insbesondere ein Kunststoff-Latten-Teil, das Hohlkammern aufweist, die in der Längsrichtung kontinuierlich sind.

10. Zusammenstellung gemäß dem vorigen Anspruch, wobei es sich beim Endteil um ein Spritzguss-Teil handelt, das dichtend auf das Ende des Kunststoff-Elements passt, insbesondere mit einem Umfang des Endteils, das mit dem Querschnitt des Kunststoff-Elements identisch ist.

## Revendications

1. Pièce de fixation (1) pour la fixation d'une partie d'extrémité (15) munie d'au moins une partie en saillie (16) à l'extrémité d'un élément synthétique (10), en particulier un élément de revêtement de façade, comprenant au moins une chambre creuse (11) qui est continue dans la direction longitudinale, ladite pièce de serrage (1) en matériau élastique sensiblement en forme de bande, comportant au moins une ouverture (2) avec au bord des lèvres (3) situées à l'opposé l'une de l'autre et s'étendant à partir de la bande et dans une position neutre s'étendant vers l'ouverture (2), et lesquelles lèvres (3) sont munies de premiers éléments de crochet (4, 6) qui s'étendent vers l'extérieur des lèvres (3), et avec de seconds éléments de crochet (5) qui s'étendent vers l'intérieur dans l'ouverture (2), dans lequel la partie de serrage (1) est dimensionné de telle sorte que avec les lèvres (3) s'étendant en le trou est disposé sur l'extrémité de l'élément synthétique, et la partie d'extrémité (15) ensuite disposée sur la pièce de fixation (1) avec la partie en saillie (16) s'étendant dans le trou et traverse l'ouverture (2), la partie en saillie (16) écarte les lèvres (3) avec les éléments de crochet extérieurs (4, 6) en les serrant dans les parois de la chambre creuse continue (11) et avec les éléments de crochet intérieur (5) serrant dans la partie en saillie.

2. Pièce de fixation (1) selon la revendication 1, dans lequel les extrémités extérieures des lèvres de la partie de serrage sont courbées, dans un mode de réalisation en outre munies de dents, pour former des éléments de crochet.

3. Pièce de fixation (1) selon la revendication 1 ou 2, dans lequel la partie de serrage est formée à partir d'une bande d'acier à ressorts, de préférence en acier à ressort inoxydable.

4. Pièce de fixation (1) selon l'une quelconque des revendications précédentes, dans lequel le trou est sensiblement rectangulaire, l'ouverture (2) est sensiblement rectangulaire, et la partie saillante (16) est sensiblement rectangulaire.

5. Pièce de fixation (1) selon revendication 1, dans lequel lesdites éléments de crochet extérieurs (4, 6) sont parties finales tourné de lesdites lèvres (3), courbé vers l'extérieur de l'ouverture (2).

6. Pièce de fixation (1) selon revendication 1 ou 5, dans lequel lesdites éléments de crochet intérieur (5) sont formes en percer des sous-lèvres aux lèvres (3), lesquelles sous-lèvres (5) s'étendants dans la même direction que les lèvres (3) et ses saillir à l'intérieur, en munir des barbes qui offre résistance à retirer une partie saillante de l'ouverture (2).

7. Assemble, en particulier un assemblage d'éléments de revêtement de façade, comprenant la pièce de fixation (1) selon l'une quelconque des revendications précédentes et:
- un élément synthétique (10), en particulier un élément de façade, avec une extrémité et au moins une chambre creuse (11) qui est continue dans la direction longitudinale, et
- une partie d'extrémité (15) munie d'au moins une partie en saillie (16) pour la fixation à l'extrémité de l'élément synthétique (10) pour obtenir sa finition, dans laquelle en utilisation
la pièce de fixation (1) avec les lèvres (3) s'étendant en le trou est disposé sur l'extrémité de l'élément synthétique, et la partie d'extrémité (15) est ensuite disposée sur la pièce de fixation (1) dans laquelle la partie en saillie (16) s'étend dans le trou et traverse l'ouverture (2), des dimensions adaptées de telle sorte que la partie en saillie (16) écarte les lèvres (3) avec les éléments de crochet extérieurs (5) en serrant dans les parois de la chambre creuse continue (11) et avec les éléments de crochet intérieur (4, 6) serrant dans la partie en saillie.

8. Ensemble selon l'une quelconque des revendications précédentes, dans lequel l'élément synthétique (10) est un profilé d'extrusion comportant une série de chambres creuses (11) continues dans la direction longitudinale et situées l'une en dessous de l'autre.

9. Assemblage selon l'une quelconque des revendications précédentes, dans lequel l'élément synthétique est un élément de revêtement de façade (10), en particulier une partie de latte synthétique, muni de chambres creuses qui sont continués dans la direction longitudinale.

10. Ensemble selon la revendication précédente, dans lequel la pièce d'extrémité est une pièce moulée par injection, s'emboîtant de manière étanche sur l'extrémité de l'élément synthétique, en particulier un périmètre de la pièce d'extrémité est identique à la section transversale de l'élément synthétique.
